# EUROPÄISCHE PATENTSCHRIFT

(11) **EP 2 769 823 B1**
(45) Veröffentlichungstag und Bekanntmachung des Hinweises auf die Patenterteilung: **10.06.2020**
(21) Anmeldenummer: 14155563.1
(22) Anmeldetag: 18.02.2014
(51) Int. Cl.: B29C 48/275, B29C 48/88, B29C 48/90, B29C 48/92, B29C 45/72, B29B 13/06

(54) **Verfahren zur Nutzung der in einem Extrusionsprozess abgegebenen Wärmemenge**
Method for using the heat emitted in an extrusion process
Procédé d'utilisation de la quantité de chaleur émise lors d'un processus d'extrusion

(30) Priorität: 24.02.2013 DE 102013202996
(43) Veröffentlichungstag der Anmeldung: 27.08.2014
(73) Patentinhaber: battenfeld-cincinnati Germany GmbH, 32547 Bad Oeynhausen (DE)
(72) Erfinder: Dohmann, Heinrich, 37671 Höxter (DE)

(56) Entgegenhaltungen:
- EP-A1- 2 407 297
- DE-A1- 2 403 295
- DE-A1-102007 050 949
- US-A1- 2003 029 176
- US-B1- 6 389 828
- US-B1- 6 620 354

## Beschreibung

Die Erfindung betrifft ein Verfahren zum Nutzen der bei einem Extrusionsprozess während des Abkühlvorganges vom Extrudat abgegebenen Wärmemenge, wobei ein Fluid, insbesondere Luft, entgegen der Extrusionsrichtung entlang des Extrudats und/oder durch das Werkzeug geführt wird, mindestens ein Teil der Wärme vom Extrudat und/oder dem Werkzeug an das Fluid übertragen wird, das erwärmte Fluid aus einem ersten Teilbereich der Prozesskette, umfassend wenigstens ein Werkzeug, eine Kalibrier- und Kühleinrichtung und eine Abzugsvorrichtung, über einen Verbindungsbereich, vorzugsweise bestehend aus wenigstens einem Verbindungsrohr, einem zweiten Teilbereich der Prozesskette, umfassend wenigstens eine Saugvorrichtung, zugeführt wird.

Bei der Herstellung von Kunststoffteilen ist es zunächst erforderlich, ein im Allgemeinen als Granulat vorliegenden thermoplastischen Kunststoff zunächst aufzuschmelzen und dann als thermoplastische Formmasse in die gewünschte Endform des Kunststoffteiles zu bringen. Dies kann einerseits durch Einspritzen in eine dafür geeignete Form oder in einem kontinuierlichen Prozess in einem Extrusionsverfahren geschehen. In beiden Fällen ist es erforderlich, dem Kunststoffgranulat zunächst Wärme zuzuführen, um dieses aufzuschmelzen, und anschließend nach der Formgebung dem geformten Kunststoffteil wieder Wärme zu entziehen, damit dieses formstabil bleibt.

Im Zuge der kontinuierlich steigenden Energiekosten ist es daher nicht nur wirtschaftlich, sondern auch unter dem Gesichtspunkt des Umweltschutzes sehr sinnvoll, sich mit Methoden zu beschäftigen, die es ermöglichen, die eingebrachte Energie, die systembedingt dem Prozess wieder entzogen werden muss, so weit wie möglich zu minimieren oder erneut für andere Prozesse zu nutzen.

Die DE10 2007 050 949 A1beschäftigt sich bereits mit diesem Thema und schlägt ein Verfahren zur Energienutzung beim Kühlen vom Extrusionsprofilen vor, bei dem Energie in Form von Wärme zum Aufschmelzen des Kunststoffes zugeführt wird und nach der Formgebung mindestens in den Vorrichtungen Werkzeug, Kalibrierung und Kühlbad so lange wieder dem Kunststoff Wärme entzogen wird, bis dieser selbsttragend ist. Erfindungsgemäß ist hierbei vorgesehen, dass ein Kühlmedium zum Kühlen entgegen der Extrusionsrichtung die Extrusionslinie durchläuft, wobei das zur Kühlung verwendete Medium von einer Vorrichtung zur nächsten geführt wird. Es wird also bereits hier eine Art Kreislauf vorgeschlagen, in dem das eingesetzte Kühlmedium von einer Vorrichtung zur nächsten weitergefördert wird, und somit das Kühlmedium von Station zu Station wärmer wird, welches dann beispielsweise zum Heizen oder zur Warmwasserbereitung genutzt werden kann. Auch hier hinter steckt demzufolge bereits der Grundgedanke, die eingebrachte Energie für weitere Prozesse nutzbar zu machen.

Die DE10 2010 064 412 A1geht hier bereits einen Schritt weiter und schlägt ein Verfahren zur Aufrechterhaltung des von einem Extrudat an ein Fluid abgegebenen Wärmestroms vor. Hierbei wird ein Fluid, in erster Linie Luft, entgegen der Extrusionsrichtung an einem Kunststoffrohr und durch das das Kunststoffrohr formende Werkzeug geleitet, die dann nach einer entsprechenden Milderung über eine Fluidaustrittsöffnung den Prozess verlässt. Der Kern der Erfindung liegt darin, den Fluidstrom so zu optimieren, dass die größtmögliche Wärmemenge dem Kunststoff entzogen wird, wobei dies über die gesamte Extrudatlänge möglichst an allen Stellen gleich ist, damit ein optimaler Kühlungsprozess erreicht werden kann. Die Druckschriften US 6 389 828 B1, US 2003/029176 A1, US 6 620 354 B1, EP 2 407 297 A1, DE 10 2007 050949 A1 und DE 24 03 295 A1 offenbaren weitere Verfahren zur Rückgewinnung von Wärme aus Extrusionsprozessen.

**Aufgabe** der Erfindung ist es, die in einem Extrusionsprozess abgegebene Wärmemenge möglichst zu 100 Prozent für einen weiteren Prozess nutzbar zu machen, ohne dass der Energieträger, dem diese Wärmemenge zugeführt wurde, in der nachfolgenden Prozesskette Schäden verursachen kann, was beispielsweise bei zu hohen Endtemperaturen des Energieträgers auftreten könnte.

Diese Aufgabe wird durch die Merkmale des Anspruchs 1 gelöst.

Durch dieses vorgeschlagene Verfahren wird sichergestellt, dass dem erwärmten Fluid - hier wird in erster Linie Luft zum Einsatz gelangen - immer so viel Fremdfluid - dies wird in der Regel Umgebungsluft sein - der erwärmten Luft beigemischt werden kann, dass diese nie eine Temperatur erreichen kann, die Schädigungen an Bauteilen des nachfolgenden Prozesses hervorrufen könnten. Es bietet sich nämlich z.B. an, diese durch das Extrudat gezogene Luft zunächst in einem Filter zu reinigen, da der Luft evtl. von der Kunststoffmasse austretende Schadstoffe zugeführt wurden, die man nicht unbedingt direkt wieder an die Umwelt abgeben möchte. Weiterhin könnten in der erwärmten Luft Additive enthalten sein, die ab einem bestimmten Temperaturbereich zur Selbstentzündung neigen könnten. Aus diesem Grund muss sichergestellt werden, dass die erwärmte Luft nicht in einen Temperaturbereich gelangt, bei dem diese beschriebenen Stoffe z.B. in dem erwähnten Filter mit dem Filterflies reagieren und Schäden verursachen.

Um diesen Herunterkühlprozess des erwärmten Fluids zu kontrollieren ist weiterbildungsgemäß vorgesehen, bevor das Fluid dem zweiten Teilbereich der Prozesskette zugeführt wird, über eine geeignete Temperaturmesseinrichtung die Fluidtemperatur zu messen. Dies kann mittels geeigneten Temperaturfühlern oder sonstigen jeglichen bekannten Temperaturmessgeräten erfolgen. Mittels dieser Kontrollmessung wird das Herunterkühlen des Fluids überwacht und es wird ermöglicht, in den Gesamtprozess eingreifen zu können, falls die gewünschte Fluidtemperatur doch nicht erreicht wurde.

Das Messen der Fluidtemperatur, bevor das Fluid dem zweiten Teilbereich zugeführt wird, hat aber auch noch den Vorteil, dass, sofern zusätzlich die Fluidtemperatur am Ausgang des ersten Teilbereiches gemessen wird, die Menge der zuzuführenden Fremdluft gesteuert oder geregelt werden kann. Durch diese Temperaturmessung ist nämlich bekannt, mit welcher Temperatur das Fluid den ersten Teilbereich verlässt und, bedingt durch die vorgegebene Maximaltemperatur mittels bekannter Regelungstechnik, bestimmbar, wie groß die Menge der erforderlichen Fremdluft ist. Hierbei ist es auch von Vorteil, die Temperatur der Fremdluft aufzunehmen, denn je wärmer die Fremdluft selbst ist, desto mehr Fremdluft muss selbstverständlich dem erwärmten Fluid beigemischt werden. Je nach Einsatzgebiet kann es erforderlich sein, diese Fremdluft über geeignete Mittel vorzukühlen, um die gewünschte Abkühlung des erwärmten Fluids erreichen zu können. Die Steuerung der Fremdluftzufuhr kann über ein regelbares Absperrventil, aber auch über simple Klappen realisiert werden. Hierbei ist es ohne weiteres denkbar, die Fremdluftmenge über eine manuell verschiebbare Klappe, die beispielsweise zu 25, 50 oder 100 Prozent geöffnet werden kann, zu bestimmen. Selbstverständlich ist die Fremdluftmenge auch über die Größe der jeweiligen Öffnung oder auch Öffnungen beeinflussbar. In jedem Fall wird durch die Fremdluftmenge sichergestellt, dass die Fluidtemperatur am Eingang des zweiten Teilbereichs unterhalb der Maximaltemperatur gehalten wird.

Vorteilhafterweise ist die Temperaturmessung des Fluids mit der Anlagensteuerung verbunden, so dass bei Erreichen eines Grenzwertes der Temperatur, also einer Grenztemperatur, in irgendeiner Form ein Alarmgeber angesteuert wird. Dies kann beispielsweise die Aktivierung eines akustischen Alarms oder eines Blinkalarms, also eines optischen Alarms, oder der Ausgabe einer Meldung am Display der Anlagensteuerung sein. Bei der heute bekannten Technik ist es auch möglich, eine derartige Alarmmeldung innerhalb eines Firmennetzwerkes an bestimmte PC's weiterzuleiten oder sogar eine E-Mail an vorbestimmte Empfänger zu senden sowie eine SMS an ein Mobiltelefon zu verschicken. Selbstverständlich ist diese Grenztemperatur, ab der ein Alarm ausgelöst wird, im System hinterlegt. Dies kann ein vorgegebener Wert unterhalb der Maximaltemperatur sein oder ein mittels eines Faktors vom Maximalwert bestimmbarer Wert sein. Zwischen dieser Grenztemperatur und der Maximaltemperatur können bei Erreichen dieses Bereiches weitere Maßnahmen vom System ausgelöst werden. Fortbildungsgemäß ist in jedem Fall vorgesehen, dass beim Erreichen der Maximaltemperatur eine Notabschaltung der gesamten Anlage ausgelöst wird. Durch diese Maßnahme ist auf jeden Fall sichergestellt, falls alle vorher eingeleiteten Alarmfunktionen nicht gegriffen haben, die Anlage abzuschalten, bevor Schaden an Anlagen oder Personal entstehen kann. Bei den üblichen HDPE-Sorten PE 100 sollte praktischer Weise die Maximaltemperatur bei 150°C und die Grenztemperatur bei 130°C liegen, somit würde ab eine Temperatur des Fluids von 130°C ein Alarm ausgelöst und beim Erreichen einer Temperatur z.B. ab 145°C der Notaus der Anlage aktiviert werden.

Ist es nun erforderlich, dem erwärmten Fluid Fremdluft beizumischen, damit die Fluidtemperatur gesenkt wird, ist es notwendig, die Strömungsgeschwindigkeit des Fluids zu beeinflussen. Denn physikalisch bedingt verläuft der Luftstrom den Weg des geringsten Widerstandes. Wird nun ein Bypass, ein Absperrventil oder eine Klappe geöffnet, um Fremdluft zuströmen zu lassen, könnte dies bei gleich bleibender Strömungsgeschwindigkeit des Fluids dazu führen, dass weniger Fluid entgegen der Extrusionsrichtung entlang des Extrudates und/oder durch das Werkzeug gezogen wird, da hier der Strömungswiderstand größer ist als der im Bereich des Zuganges der Fremdluft. Um dies zu kompensieren kann die Strömungsgeschwindigkeit durch die Saugvorrichtung erhöht oder minimiert werden.

Wenn also z.B. zur Absenkung der Ablufttemperatur über das Absperrventil Fremdluft zu dem Luftstrom aus dem ersten Teilbereich hinzugeführt , also addiert wird, muss die Saugvorrichtung entsprechend des Anteiles an Fremdluft den Durchsatz erhöhen. Mit Hilfe einer zusätzlichen Volumenstrommessung im ersten Teilbereich oder des Fremdfluids kann die Saugvorrichtung über eine entsprechende Steuer- und oder Regeltechnik Wärmemenge aus dem ersten Teilbereich trotz Zufluss von Fremdluft immer konstant halten.

Durch diese Regelung der Strömungsgeschwindigkeit des Fluids wird sichergestellt, dass die im ersten Teilbereich der Prozesskette, also die vom Extrudat und/oder Werkzeug abgegebene Wärmemenge weitgehend der am Ende der Prozesskette abgegebenen Wärmemenge entspricht. Durch das vorgeschlagene Verfahren kann zwar die Temperatur des Energieträgers, in diesem Fall der Luft bzw. des Fluids, das zur weiteren Verwendung einem anderen Prozess zugeführt wird, niedriger sein als die Fluidtemperatur, die bei der Kühlung des Extrudates und des Werkzeuges das durchströmende Fluid aufweist. Jedoch ist die Wärmemenge, die dem Energieträger in den Kühlprozess vom Extrudat und/oder dem Werkzeug übergeben wurde, weitgehend identisch der Wärmemenge, die an den Nachfolgeprozess übergeben wird.

In den Zeichnungen wird schematisch eine erfindungsgemäße Vorrichtung gezeigt:
- Fig. 1: zeigt eine typische Extrusionslinie
- Fig. 2: Teilbereiche der Prozesskette und
- Fig. 3: weitere Teilbereiche der Prozesskette

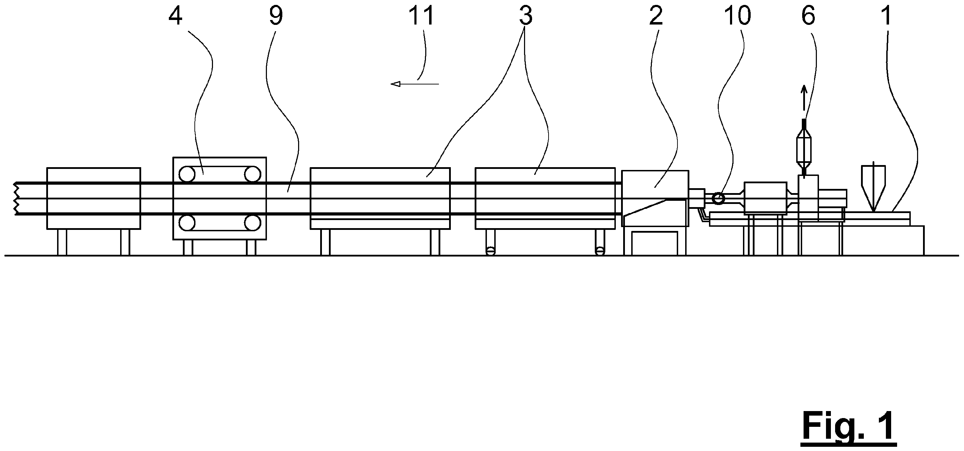

Figur 1 zeigt eine typische Extrusionslinie, wie sie heute für die Profilextrusion, egal, ob für die Produktion von Fensterprofilen oder Rohren, zum Einsatz kommt. Sie zeigt einen Extruder 1, in dem Kunststoff aufgeschmolzen wird, und kontinuierlich zur Formgebung ins Extrusionswerkzeug 2 gefördert wird. Daran schließt sich eine Kalibrier- und Kühleinrichtung 3 an, je nach Profil können weitere Kühlstationen eingesetzt werden. Nach den Kühlstationen schließt sich eine Abzugsvorrichtung 4 an. Um die Endlosprofile 9 auf die gewünschte Länge abzuschneiden ist anschließend in der Regel (nicht dargestellt) eine Trennvorrichtung angeordnet. Entgegen der Extrusionsrichtung 11 wird mittels einer Saugvorrichtung 8 ein Fluid durch das Extrudat 9, hier ein Kunststoffrohr, und durch das Werkzeug 2 gezogen und über ein Verbindungsrohr einem Luftaustritt 6 zugeführt.

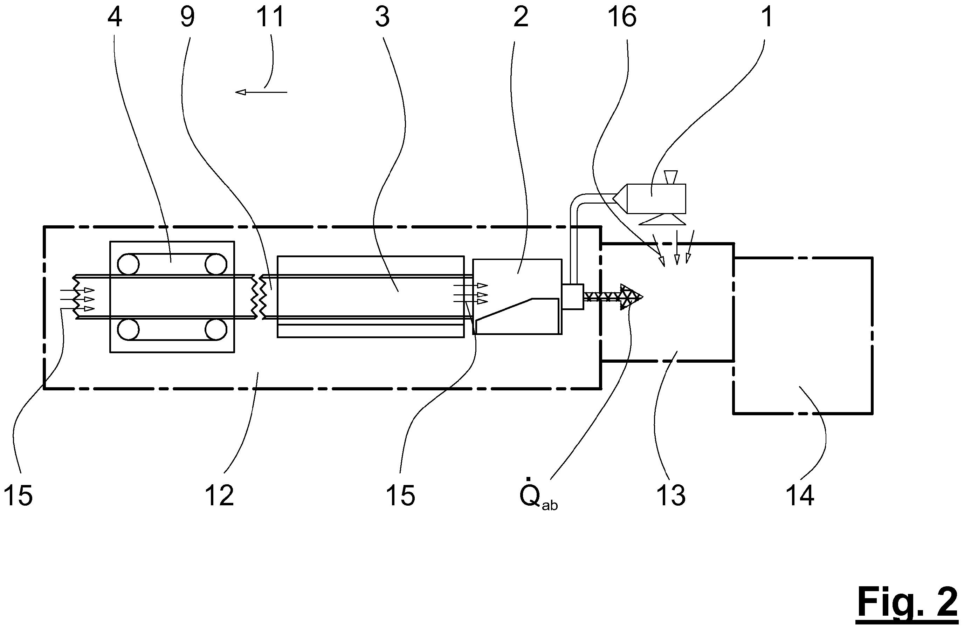

Figur 2 zeigt einen Teilbereich dieser Extrusionslinie. Zu erkennen ist wieder der Extruder 1, der die aufgeschmolzene Kunststoffmasse an ein Werkzeug 2 übergibt, in der ein Kunststoffrohr geformt wird. Die Formstabilität wird in der Kalibrier- und Kühlstation 3 geschaffen. Weitere Kühlstationen können sich anschließen, bis das formstabile Rohr über den Abzug 4 in Extrusionsrichtung 11 gefördert wird. Mittels einer strichpunktierten Linie wird ein erster Teilbereich 12 dieser Prozesskette markiert. Dieser Teilbereich umfasst mindestens das Werkzeug 2, die Kühl- und Kalibrierstation 3 sowie den Abzug 4. Durch diesen ersten Teilbereich wird entgegen der Extrusionsrichtung 11 ein Fluid 15, in der Regel Umgebungsluft, entlang der Wandung, dies kann die Innen- oder Außenwandung sein, des Kunststoffrohres gefördert, wobei der Luftstrom das Werkzeug 2 oder Teilbereiche des Werkzeuges 2 ebenfalls umströmen kann. In diesem Teilbereich 12 wird dem Luftstrom 15 Energie in Form von Wärme übergeben. Diese Wärmemenge ist symbolisch mit einem dicken Pfeil als *Q̇_{ab}* gekennzeichnet. Diese Wärmemenge *Q̇_{ab}* wird einem zweiten Teilbereich 14, hier durch eine strichpunktierte Blackbox gekennzeichnet, übergeben. Zwischen dem ersten Teilbereich 12 und dem zweiten Teilbereich 14 befindet sich ein Verbindungsbereich 13. Innerhalb dieses Verbindungsbereiches 13 kann dem Fluid 15 ein Fremdfluid 16 zugefügt werden und wird, sofern ein Fremdfluid 16 zugemischt wurde, als Mischfluid 21 in den zweiten Teilbereich 14 geführt.

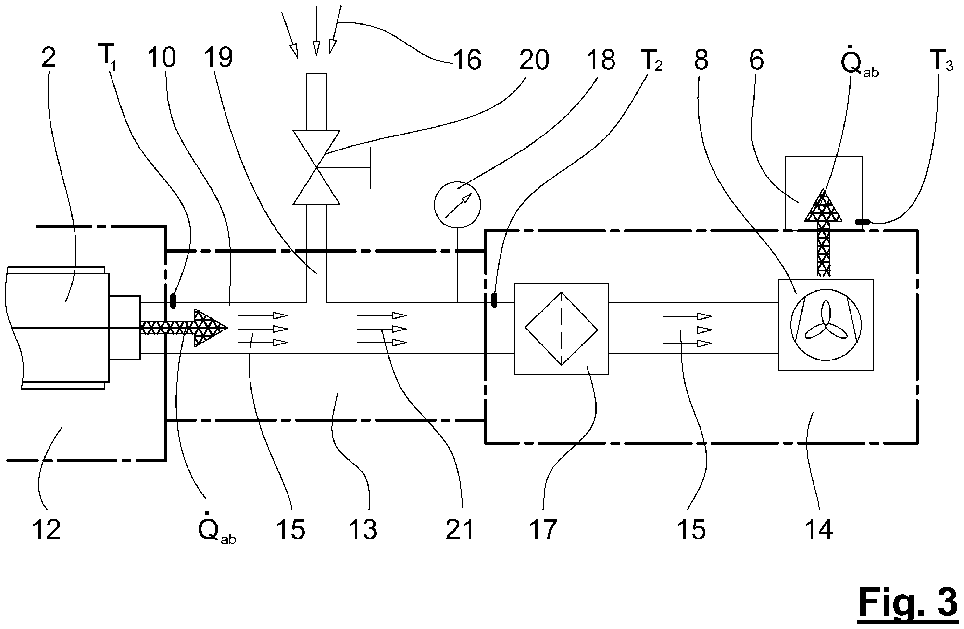

Figur 3 schließt sich quasi an Figur 2 an. Der Teilbereich 12 mit dem Werkzeug 2 ist schematisch leicht angedeutet, der dicke Pfeil symbolisiert wieder die vom ersten Teilbereich 12 abgegebene Wärmemenge *Q̇_{ab}.* Das Fluid 15 durchströmt in einem Verbindungsrohr 10 den Verbindungsbereich 13. Das Verbindungsrohr 10 steht mit einem Fremdluftkanal 19 in Verbindung, über den Fremdluft 16 angesaugt werden kann. Die Menge der Fremdluft 16 wird über ein Absperrventil 20 geregelt. Wie bereits weiter oben beschrieben kann die Menge von einfachen manuell bedienbaren Schiebern bis hin zu komplexen Anlagensteuerungen gesteuert oder geregelt werden. Denkbar ist auch eine Bohrung, die den permanenten Zustrom von Umgebungsluft (Fremdfluid) ermöglicht. Ist das mögliche Prozessfenster mit all den daraus entstehenden Parameter bekannt, ist das eine einfache Lösung, es könnte dann sogar die Temperaturmessung erübrigt.

Über eine Temperaturmesseinrichtung 18 kann die Temperatur des Mischfluids 21 am Ende des Verbindungsbereiches 13 und somit am Eingang des Teilbereiches 14 gemessen werden. Hiermit wird also sichergestellt, dass die in den Teilbereich 14 übergebene Luft niemals den Maximalwert erreicht. Bei dieser vorgeschlagenen Vorrichtung kann die Fluidtemperatur am Anfang des Verbindungsbereiches 13 zusätzlich gemessen werden, wodurch die temperaturabhängige Steuerung und Regelung der Fremdluft 16 ermöglicht wird. In dem gemäß Figur 3 dargestellten Beispiel wird das Fluid im Teilbereich 14 zunächst durch einen Filter 17 geführt und dann dem Luftaustritt 6 zugeführt. An diesem Luftaustritt 6 schließen sich dann weitere Prozesse an, die die in der beschriebenen Prozesskette abgeführte Wärmemenge *Q̇_{ab}* nutzen. Zur Durchführung des gesamten Verfahrens ist eine hier schematisch dargestellte Saugeinrichtung 8 erforderlich, die das Fluid 15 durch die gesamte Prozesskette saugt. Vorteilhafterweise ist auch die Saugvorrichtung 8 mit der Anlagensteuerung verbunden, bei der auch die Fluidtemperaturen als Prozessgrößen eingehen und somit über die Steuerung und somit einerseits über das Absperrventil 20 die zuzuführende Menge an Fremdluft 16, andererseits auch die Strömungsgeschwindigkeit des Fluids 15 über die Saugeinrichtung 8 z.B. mittels eines Ventilators gesteuert und geregelt werden kann.

### Bezugszeichenliste:

- 1: Extruder
- 2: Extrusionswerkzeug
- 3: Kalibrier- und Kühleinrichtung
- 4: Abzugsvorrichtung
- 5: Trennvorrichtung
- 6: Luftaustritt
- 7: Filter
- 8: Saugvorrichtung
- 9: Kunststoffprofil
- 10: Verbindungsrohr
- 11: Extrusionsrichtung
- 12: erster Teilbereich
- 13: Verbindungsbereich
- 14: zweiter Teilbereich
- 15: Fluid
- 16: Fremdfluid
- 17: Filter
- 18: Temperaturmesseinrichtung
- 19: Fremdluftkanal
- 20: Absperrventil
- 21: Mischfluid aus 15 und 16

- *Q̇_{ab}*: Wärmemenge
- T₁: Temperatur am Ausgang von 12
- T₂: Temperatur am Eingang zu 13
- T₃: Temperatur am Ausgang von 14
- Tₘₐₓ: Maximaltemperatur

## Patentansprüche

1. Verfahren zum Nutzen der bei einem Extrusionsprozess während des Abkühlvorganges vom Extrudat (9) abgegebenen Wärmemenge (*Q̇_{ab}*), wobei,
ein Fluid, insbesondere Luft, entgegen der Extrusionsrichtung (11) entlang des Extrudats (9) und/oder durch das Werkzeug (2) geführt wird,
mindestens ein Teil der Wärme vom Extrudat (9) und/oder vom Werkzeug (2) an das Fluid (15) übertragen wird,
das erwärmte Fluid (15) aus einem ersten Teilbereich (12) der Prozesskette, umfassend wenigstens ein Werkzeug (2), eine Kalibrier- und Kühleinrichtung (3) und eine Abzugsvorrichtung (4), über einen Verbindungsbereich (13), vorzugsweise bestehend aus wenigstens einem Verbindungsrohr (10), einem zweiten Teilbereich (14) der Prozesskette, umfassend wenigstens eine Saugvorrichtung (8), zugeführt wird,
wobei die Temperatur (T) des Fluids (15) einen vorbestimmten Maximalwert (Tₘₐₓ) nicht überschreitet,
wobei im Verbindungsbereich (13) ein Fremdfluid (16) dem erwärmten Fluid (15) zugemischt wird, um die Isttemperatur des entstandenen Mischfluids (21) mindestens unter den vorgegebenen Maximalwert zu senken, bevor es dem zweiten Teilbereich (14) der Prozesskette zugeführt wird,
**dadurch gekennzeichnet, dass**
die vom ersten Teilbereich (12) der Prozesskette abgegebene Wärmemenge (*Q̇_{ab}*) weitgehend der am Ende der Prozesskette vom zweiten Teilbereich (14) abgegebenen Wärmemenge (*Q̇_{ab}*) entspricht, die Fluidtemperatur (T₃) am Ende der Prozesskette niedriger ist als die Fluidtemperatur (T₁) am Ausgang des ersten Teilbereiches (12), wobei die abgegebene Wärmemenge (Q̇_{ab}) weitgehend konstant bleibt,
der Volumenstrom des Fluids (15) und/oder des Fremdfluids (16) gemessen wird und die Saugleistung der Saugvorrichtung (8) in Abhängigkeit von der Volumenstrommessung gesteuert und/oder geregelt wird.

2. Verfahren nach Anspruch 1, **dadurch gekennzeichnet, dass** über eine Temperaturmesseinrichtung (18) die Fluidtemperatur (T₂) gemessen wird, bevor das Fluid dem zweiten Teilbereich (14) der Prozesskette zugeführt wird und/oder zusätzlich die Fluidtemperatur (T₁) am Ausgang des ersten Teilbereichs (12) gemessen wird.

3. Verfahren nach Anspruch 2, **dadurch gekennzeichnet, dass** über ein Absperrventil (20) die Menge des Fremdfluids (16) beeinflusst wird.

4. Verfahren nach Anspruch 3, **dadurch gekennzeichnet, dass** in Abhängigkeit der Fluidtemperatur (T2) am Ausgang des ersten Teilbereichs (12) die Menge an Fremdfluid (16) gesteuert und/oder geregelt wird, um die Fluidtemperatur (T2) am Eingang des zweiten Teilbereiches (14) unterhalb der Maximaltemperatur (Tmax) zu halten.

5. Verfahren nach einem der vorigen Ansprüche, **dadurch gekennzeichnet, dass** beim Erreichen einer Grenztemperatur, die bei einem vorgegebenen Wert unterhalb der Maximaltemperatur (Tmax) liegt, ein Alarmgeber angesteuert wird und/oder beim Erreichen der Maximaltemperatur (Tmax) eine Notabschaltung der Anlage ausgelöst wird.

6. Verfahren nach einem der vorigen Ansprüche, **dadurch gekennzeichnet, dass** die Strömungsgeschwindigkeit des Fluids (15, 16) durch die Saugvorrichtung (8) erhöht oder minimiert wird.

## Claims

1. Process for using the amount of air (*Q̇_{αb}*) released by the extrudate (9) during the cooling process within an extrusion process,
a fluid, especially air, being driven along the extrudate (9) and/or through the die (2) in a direction opposite to the extrusion direction (11),
at least part of the heat being transferred from the extrudate (9) and/or from the die (2) to the fluid (15),
the heated fluid (15) being driven from a first part section (12) of the process chain, consisting of at least a die (2), a calibration and cooling device (3) and a suction device (4), via a connection area (13), preferably consisting of at least one connecting tube (10), to a second part section (14) of the process chain, comprising at least a suction device (8),
the temperature (T) of the fluid (15) not exceeding a predefined maximum value (Tₘₐₓ),
an external fluid (16) being added to the heated fluid (15) within the connection area (13) in order to lower the actual temperature of the resulting mixed fluid (21) at least below the determined maximum value, before it is fed to the second part section (14) of the process chain,
**characterized in that**
the amount of air (*Q̇_{ab}*) released by the first part section (12) of the process chain is largely consistent with the amount of air (*Q̇_{ab}*) released at the end of the process chain by the second part section (14),
and that the temperature of the fluid (T₃) at the end of the process chain is lower than the temperature of the fluid (T₁) at the exit of the first part section (12), the released amount of air (*Q̇_{ab}*) remaining largely constant,
that the volume flow rate of the fluid (15) and/or the external fluid (16) is measured and that the suction capacity of the suction device (8) is adjusted and/or controlled as a function of the volume flow measurement.

2. Process according to claim 1, **characterized in that** the temperature of the fluid (T₂) is measured by a temperature measuring device, before the fluid is fed to the second part section (14) of the process chain and/or that the temperature of the fluid (T₁) is additionally measured at the exit of the first part section (12).

3. Process according to claim 2, **characterized in that** the amount of external fluid (16) is adjusted by means of a shut-off valve (20).

4. Process according to claim 2, **characterized in that** the amount of external fluid (16) is adjusted and/or controlled as a function of the temperature of the fluid (T₂) at the exit of the first part section (12) in order to keep the temperature of the fluid (T₂) below the maximum temperature (Tₘₐₓ) at the entry of the second part section (14).

5. Process according to one of the proceeding claims, **characterized in that** an alarm signaling device is triggered on reaching a limit temperature which is pre-set at value below the maximum temperature (Tₘₐₓ), and/or that on reaching the limit temperature, an emergency shutdown of the system is triggered.

6. Process according to one of the proceeding claims, **characterized in that** the flow rate of the fluid (15, 16) is increased or decreased by the suction device (8).

## Revendications

1. Procédé pour l'utilisation de la quantité de chaleur (*Q̇_{ab}*) émise par l'extrudat (9) lors du processus de refroidissement faisant partie d'un procédé d'extrusion,
un fluide, de l'air notamment, étant guidé le long de l'extrudat (9) et/ou à travers l'outil (2) dans le sens opposé à la direction d'extrusion (11), au moins une partie de la chaleur étant transférée de l'extrudat (9) et/ou de l'outil (2) au fluide (15),
le fluide chauffé (15) étant guidé d'une première section partielle (12) de la chaine des processus, comprenant au moins un outil (2), un dispositif d'extrusion et de refroidissement (3) et un dispositif aspirateur (4), via une zone de connexion (13), composée de préférence d'un tube de raccordement (10), à une deuxième section partielle (14) de la chaine des processus, comprenant au moins un dispositif aspirateur (8),
la température (T) du fluide (15) ne pas dépassant une valeur maximale prédéterminée (Tₘₐₓ),
un fluide externe (16) étant ajouté au fluide chauffé (15) dans la zone de connexion (13) afin de reduire la température réelle du fluide mixte (21) à une valeur au-dessous de la valeur maximale avant de l'alimenter à la deuxième section partielle (14) de la chaine des processus,
**caractérisé en ce que**
la quantité de chaleur (*Q̇_{ab}*) émise par la première section partielle (12) de la chaine des procédés correspond largement à la quantité de chaleur (*Q̇_{ab}*) émise par la deuxième section partielle (14) à la fin de la chaine des processus,
**que** la température du fluide (T₃) à la fin de la chaine des processus est inférieure à température du fluide (T₁) à la sortie de la première section partielle (12), la quantité de chaleur (*Q̇_{ab}*) émise restant largement constante,
**que** le débit volumique du fluide (15) et/ou du fluide externe (16) est mesuré et que la puissance d'aspiration du dispositif aspirateur (8) est adaptée et/ou contrôlée en fonction de la mesure de débit volumique.

2. Procédé selon la revendication 1, **caractérisé en ce que** la température du fluide (T₂) est mesurée au moyen d'un dispositif de mesure de température (18) avant que le fluide soit alimenté à la deuxième section partielle (16) de la chaine des processus et/ou qu'en outre la température du fluide (T₁) est mesurée à la sortie de la première section partielle (12).

3. Procédé selon la revendication 2, **caractérisé en ce que** la quantité du fluide externe (16) est influencée au moyen d'une vanne d'arrêt (20).

4. Procédé selon la revendication 3, **caractérisé en ce que** la quantité du fluide externe (16) est adaptée et/ou contrôlée en fonction de la température du fluide (T₂) à la sortie de la première section partielle (12) afin de maintenir la température du fluide (T₂) à l'entrée de la deuxième section partielle (14) au-dessous de la température maximale (Tₘₐₓ).

5. Procédé selon l'une quelconque des revendications précédentes, **caractérisé en ce qu'**un transmetteur d'alarme est commandé lorsqu'une température limite est atteinte dont la valeur est au-dessous de la température maximale (Tₘₐₓ) et/ou que, lorsque la température maximale (Tₘₐₓ) est atteinte, un arrêt d'urgence du système est déclenché.

6. Procédé selon l'une quelconque des revendications précédentes, **caractérisé en ce que** la vitesse d'écoulement du fluide (15, 16) est augmenté ou minimisé au moyen du dispositif aspirateur (8).
